# EUROPEAN PATENT SPECIFICATION

(11) **EP 2 971 237 B1**
(45) Date of publication and mention of the grant of the patent: **04.05.2022**
(21) Application number: 14718844.5
(22) Date of filing: 13.03.2014
(51) Int. Cl.: C08K 3/10, C08K 5/34, C09D 7/40, C23C 22/56, C23C 22/66, C23C 22/68, C23F 11/08, C23F 11/14, C23F 11/18, C23G 1/22, C23G 1/26, C09D 5/08, C23G 1/06

(54) **AZOLE COMPOUNDS AS CORROSION INHIBITORS**
AZOLVERBINDUNGEN ALS KORROSIONSINHIBITOREN
COMPOSÉS D'AZOLE UTILISÉS EN TANT QU'INHIBITEURS DE CORROSION

(30) Priority: 16.03.2013 US 201361802613 P
(43) Date of publication of application: 20.01.2016
(60) Divisional application: 22166116.8
(73) Proprietor: PRC-Desoto International, Inc., Sylmar, California 91342 (US)
(72) Inventor: MORRIS, Eric L., Murrieta, California 92563 (US)
(74) Representative: f & e patent
(86) International application number: PCT/US2014/026019
(87) International publication number: WO 2014/151570

(56) References cited:
- EP-A2- 2 366 743
- EP-A2- 2 570 515
- GB-A- 2 255 783
- US-A- 3 340 001
- US-A- 4 098 720
- US-A- 5 567 534
- US-A- 5 747 439
- US-A1- 2004 255 819
- US-A1- 2006 091 354
- US-A1- 2010 151 253

## Description

### BACKGROUND

The oxidation and degradation of metals used in aerospace, commercial, and private industries are serious and costly problems. To prevent or reduce the oxidation and degradation of the metals used in these applications; a protective coating can be applied to the metal surface. This protective coating may be the only coating applied to the metal, or other coatings can be applied to further protect the metal surface. One problem that maybe faced by manufacturers when coating a metal surface to prevent corrosion is providing adequate coverage for achieving the desired level of performance. It is difficult, particularly when coating large metal parts, such as in aerospace applications, to determine whether the metal substrate has been adequately coated in all desired areas.

Corrosion resistant coatings are known in the art of metal finishing, and older technologies involve chrome based coatings which have an undesirable environmental impact. Other corrosion resistant coatings are also known, including some chrome free coatings and/or pre-treatment coatings that may prevent or reduce oxidation and degradation of metals and aid in corrosion resistance. Metal surface coatings that can provide corrosion resistance and also aid in the prevention or reduction of oxidation and degradation are desired.

GB 2 255 783 A discloses a composition comprising sodium silicate, lithium carbonate, sodium fluoride, triazole phosphoric ester and a cationic surfactant for forming a sealing coating on a chromated zinc plated steel sheet.

US 5 567 534 A discloses a composition comprising tolyltriazole, lithium silicate and disodium hydrogen phosphate for forming a conversion coating on a zinc alloy plated steel sheet.

### SUMMARY

According to the present invention, is provided a composition for application to a metal substrate as defined in claim 1.

### DETAILED DESCRIPTION

According to the present invention, a composition for application to a metal substrate comprises an aqueous carrier, an azole compound, and a metal cation corrosion inhibitor. The metal cation corrosion inhibitor is a lithium cation. The metal cation is provided in the composition in the form of a metal salt. The metal salt which acts as the cation source is lithium carbonate.

An azole compound may be incorporated into an epoxy, urethane, or fluorinated urethane in a primer or topcoat formulation, with an optional additional corrosion inhibitor, e.g., CaSO₄.

As used herein, the following terms have the following meanings.

The term "salt," as used herein, refers to an ionically bonded inorganic compound and/or the ionized anion and cation of one or more inorganic compounds in solution.

The term "substrate," as used here, refers to a material having a surface. In reference to applying a conversion coating, the term "substrate" refers to a metal substrate such as aluminum, iron, copper, zinc, nickel, magnesium, and/or an alloy of any of these metals including but not limited to steel. Some exemplary substrates include aluminum and aluminum alloys. Additional exemplary substrates include high copper aluminum substrates (i.e., substrates including an alloy containing both aluminum and copper in which the amount of copper in the alloy is high, for example, an amount of copper in the alloy of 3 to 4%).

The term "conversion coating," also referred to herein as a "conversion treatment" or "pretreatment," refers to a treatment for a metal substrate that causes the chemistry of the metal surface to be converted to a different surface chemistry. The terms "conversion treatment" and "conversion coating" also refer to the application or treatment of a metal surface in which a metal substrate is contacted with an aqueous solution having a metal of a different element than the metal contained in the substrate. Additionally, the terms "conversion coating" and "conversion treatment" refer to an aqueous solution having a metal element in contact with a metal substrate of a different element, in which the surface of the substrate partially dissolves in the aqueous solution, leading to the precipitation of a coating on the metal substrate (optionally using an external driving force to deposit the coating on the metal substrate).

As used in this disclosure, the term "comprise" and variations of the term, such as "comprising" and "comprises," are not intended to exclude other additives, components, integers ingredients or steps.

All amounts disclosed herein are given in weight percent of the total weight of the composition at 25°C and one atmosphere pressure, unless otherwise indicated.

The azole compound may include cyclic compounds having 1 nitrogen atoms, such as pyrroles, 2 or more nitrogen atoms, such as pyrazoles, imidazoles, triazoles, tetrazoles and pentazoles, 1 nitrogen atom and 1 oxygen atom, such as oxazoles and isoxazoles, and 1 nitrogen atom and 1 sulfur atom, such as thiazoles and isothiazoles. Nonlimiting examples of suitable azole compounds include 2,5-dimercapto-1,3,4-thiadiazole (CAS:1072-71-5), 1H-benzotriazole (CAS: 95-14-7), 1H-1,2,3-triazole (CAS: 288-36-8), 2-amino-5-mercapto-1,3,4-thiadiazole (CAS: 2349-67-9), also named 5-amino-1,3,4-thiadiazole-2-thiol, and 2-amino-1,3,4-thiadiazole (CAS: 4005-51-0). In some embodiments, for example, the azole comprises 2,5-dimercapto-1,3,4-thiadiazole.

The azole compound is present in the composition at a concentration of 0.0005 g per liter of composition to 3 g per liter of composition. For example, in some embodiments, the azole compound may be present in the composition at a concentration of 0.004 g per liter of composition to 0.1 g per liter of composition.

The metal cation is lithium.

The metal cation can be present in the composition at a concentration of 0.05 g per liter of composition to 25 g per liter of composition. For example, in some embodiments, the metal cation can be present in the composition at a concentration of 0.05 g per liter of composition to 16 g per liter of composition. In some embodiments, for example, the metal cation can be present in the composition at a concentration of 0.1 g per liter of composition to 10 g per liter of composition. For example, in some embodiments, the metal cation can be present in the composition at a concentration of 1g per liter of composition to 5 g per liter of composition. discussed in further detail below, the metal cation is provided in the composition in the form of a metal salt, in which case, the amounts listed here reflect the amount of the salt in the composition.

As noted above, the metal cation is provided in the solution in the form of a salt (i.e., a metal salt may serve as the source for the metal cation in the composition) having and anion and the metal cation as the cation of the salt. The metal salt is lithium carbonate.

The composition is an aqueous coating composition, and the composition includes an aqueous carrier which may optionally comprise one or more organic solvents. Nonlimiting examples of suitable such solvents include propylene glycol, ethylene glycol, glycerol, low molecular weight alcohols, and the like. When used, the organic solvent may be present in the composition in an amount of 30 g solvent per 12 liters of composition to 400 g solvent per 12 liters of composition, with the remainder of the carrier being water. For example, in some embodiments, the organic solvent may be present in the composition in an amount of 100 g solvent per 12 liters of composition to 200 g solvent per 12 liters of composition, for example 107 g solvent per 12 liters of composition, with the remainder of the carrier being water. In some embodiments, however, the aqueous carrier is primarily water, e.g., deionized water. The aqueous carrier is provided in an amount sufficient to provide the composition with the concentrations of the metal ions and azole compounds described above.

The composition includes an azole compound, lithium carbonate and water. The azole compound is present in this composition in an amount of 0.0005 g per liter of composition to 3 g per liter of composition, or may be present in an amount of 0.004 g per 1000 g of composition to 0.1g per liter of composition. The lithium carbonate may be present in this composition in an amount of 0.05 g per 1000 g of composition to 16 g per 1000 g of composition, or 1 g per 1000 g of composition to 5 g per 1000 g of composition. The water may make up the balance of the 1000 g of solution (i.e., the water is provided in an amount sufficient to provide the azole compound and rare earth salt in the concentrations described here).

According to the invention, the composition consists essentially of an aqueous carrier, an azole compound, lithium cation, and carbonate anion. The lithium carbonate may be included in an amount of 1.6 g/L, the azole compound may be included in an amount of 0.01 g/L to 1 g/L, and the aqueous carrier (e.g., water) may be provided in an amount sufficient to provide a total composition weight of 800 g (e.g., the aqueous carrier is provided in an amount sufficient to provide a final composition having the concentrations of the lithium carbonate and azole compound described here). A composition including lithium carbonate and an azole compound in the concentrations within the above ranges may have an alkaline pH, i.e., a pH above 7.

The process for preparing a metal substrate comprises optionally degreasing the metal substrate. The metal substrate may then be immersed or spray coated with an alkaline deoxidizer, for example, a lithium containing alkaline deoxidizer, for 1 to 10 minutes, for example 3 minutes. The metal substrates may then optionally be allowed to dry at ambient temperature. However, the substrate need not be allowed to dry, and in some embodiments, drying is omitted. A composition according to the invention is then applied to the metal substrate. The composition may be applied without rinsing the substrate prior to and or after coating, although a rinse may be performed if desired.

According to some embodiments, a process for coating the metal substrate comprises coating the metal substrate with a lithium based composition according to the present invention, optionally allowing the lithium based composition on the metal substrate to dry or partially dry at room temperature, and optionally rinsing the substrate after drying or partial drying (if performed). A final rinse is not required prior to subsequent topcoat or primer coatings. As the lithium based coating composition is alkaline, prior deoxidizing and/or degreasing is not required, but may be performed if desired. Further, applying the compositions according to the invention at an elevated temperature and/or drying the coated substrate at an elevated temperature is not required. Also, a final rinse of the substrate is not required to achieve corrosion resistance on the substrate.

According to other embodiments of the invention, a substrate comprises a metal surface having a conversion coating deposited from the composition of claim 1 on at least a part of the metal surface. For example, in some embodiments, the substrate comprises an aluminum or aluminum alloy surface having the composition on at least a part of the surface. The substrate may then be coated with a primer and/or a topcoat, i.e., the composition according to the invention may be applied to the metal substrate, optionally followed by coating with a primer coat, and/or a topcoat.

The compositions according to the invention are compatible with conventional chromate based primer coats, such as the primer coat sold under Product Code Deft 44GN072, available from PRC-DeSoto International, Inc., Sylmar, CA. Alternately, the primer coat can be a chromate-free primer coat, which chromate-free primer coats are known in the art. Other suitable chrome-free primers include those that can pass the military requirement of MIL-PRF-85582 Class N or MIL-PRF-23377 Class N. Other nonlimiting examples of suitable primer coats include those available from PRC-DeSoto International, Inc., Sylmar, CA, Product Code numbers Deft 02GN083 and Deft 02GN084.

According to still other embodiments, the metal substrate may be pre-treated prior to contacting the metal substrate with the compositions described above. As used herein, the term "pre-treating" refers to the surface modification of the substrate prior to subsequent processing. Such surface modification can include various operations, including, but not limited to cleaning (to remove impurities and/or dirt from the surface), deoxidizing, and/or application of a solution or coating, as is known in the art. Pre-treatment may have one or more benefits, such as the generation of a more uniform starting metal surface, improved adhesion to a subsequent coating on the pre-treated substrate, and/or modification of the starting surface in such a way as to facilitate the deposition of a subsequent conversion coating.

According to some embodiments, the metal substrate may be prepared by first solvent treating the metal substrate prior to contacting the metal substrate with the composition. As used herein, the term "solvent treating" refers to rinsing, wiping, spraying, or immersing the substrate in a solvent that assists in the removal of inks, oils, etc. that may be on the metal surface. Alternately, the metal substrate may be prepared by degreasing the metal substrate using conventional degreasing methods prior to contacting the metal substrate with composition.

The metal substrate may be pre-treated by solvent treating the metal substrate. Then, the metal substrate may be pre-treated by cleaning the metal substrate with an alkaline cleaner prior to application of the conversion coating composition. One example of a suitable pre-cleaner is a basic (alkaline) pretreatment cleaner. However, in some embodiments of the present invention (e.g., when a lithium based composition is first coated on the substrate followed by coating with an azole based composition), such a prior cleaning procedure may not be necessary (for example, because the lithium based composition is alkaline). The pre-cleaner may also include a corrosion inhibitor, some of which may "seed" the surface of the metal substrate during the cleaning process with the corrosion inhibitor to minimize metal surface attack, and/or facilitate the subsequent conversion coating. Other suitable, but nonlimiting, pre cleaners include degreasers and deoxidizers, such as Turco 4215-NCLT, available from Telford Industries, Kewdale, Western Australia, Arnchern 7/17 deoxidizers, available from Henkel Technologies, Madison Heights, MI, and phosphoric acid-based deoxidizers, available from PRC-DeSoto International, Inc., Sylmar, CA.

In some embodiments, the metal substrate may be pre-treated by mechanically deoxidizing the metal prior to applying the composition on the metal substrate. A nonlimiting example of a typical mechanical deoxidizer is uniform roughening of the surface using a Scotch-Brite pad, or similar device.

According to some embodiments, the metal substrate may be pre-treated by solvent wiping the metal prior to applying the composition to the metal substrate. Nonlimiting examples of suitable solvents include methyl ethyl ketone (MEK), methyl propyl ketone (MPK), acetone, and the like.

Additional optional procedures for preparing the metal substrate include the use of a surface brightener, such as an acid pickle or light acid etch, a smut remover, as well as immersion in an alkaline solution.

The metal substrate may be rinsed with either tap water, or distilled/de-ionized water between each of the pretreatment steps, and may be rinsed well with distilled/deionized water and/or alcohol after contact with the conversion coating composition. However, as noted above, according to some embodiments of the present invention, some of the above described pre-treatment procedures and rinses may not be necessary prior to application of the composition.

Once the metal substrate has been appropriately pretreated, if desired, the composition may then be allowed to come in contact with at least a portion of the surface of the metal substrate. The metal substrate may be contacted with the composition using any conventional technique, such as dip immersion, spraying, or spreading using a brush, roller, or the like. With regard to application via spraying, conventional (automatic or manual) spray techniques and equipment used for air spraying may be used. In other embodiments, the composition may be applied using an electrolytic-coating system.

After contacting the metal substrate with the composition, the metal substrate may optionally be air dried. However, the substrate need not be allowed to dry, and in some embodiments, drying is omitted. A rinse is not required, but may be performed if desired.

According to some embodiments, the metal substrate may be first prepared by mechanical abrasion and then wet-wiped to remove smut. The substrate may then be air-dried prior to application. Next, the composition may be applied to the metal substrate and optionally allowed to dry, for example in the absence of heat greater than room temperature. However, the substrate need not be allowed to dry, and in some embodiments, drying is omitted. The substrate need not be rinsed, and the metal substrate may then be further coated with primers and/or top coats to achieve a substrate with a finished coating.

In some embodiments, a metal substrate comprises a composition according to the invention on at least a portion of the substrate, and a primer and/or topcoat on at least a portion of the composition. The compositions according to invention are compatible with conventional chromate based primer coats, such as the primer coat sold under Product Code Deft 44GN072, available from PRC-DeSoto International, Inc., Sylmar, CA. Alternately, the primer coat can be a chromate-free primer coat, which chromate-free primer coats are known in the art. Other suitable chrome-free primers include those that can pass the military requirement of MIL-PRF-85582 Class N or MIL-PRF-23377 Class N. Other nonlimiting examples of suitable primer coats include those available from PRC-DeSoto International, Inc., Sylmar, CA, Product Code numbers Deft 02GN083 and Deft 02GN084. The topcoat may be any suitable topcoat, for example, polyurethane or fluorinated polyurethane topcoats, which are known in the art.

In another embodiment, the azole compounds described herein may be incorporated into an epoxy or urethane or fluorinated urethane based primer and/or topcoat formulation or composition. In particularly suitable embodiments, the azole may comprise a benzotriazole, which may be added to the formulation in an amount of 1 g benzotriazole to 300 g of an epoxy base. To prepare the azole containing primer and/or topcoat formulation, the azole compound may be first dissolved in a solvent, such as an alcohol (e.g., isopropyl alcohol, or a secondary butyl alcohol), for example, which may facilitate addition to the primer and/or topcoat formulation.

When used in a primer and/or topcoat formulation or composition, the azole compound may be present in the primer and/or topcoat formulation or composition in an amount of 0.05 g/1000 L of composition to 70g/1000 L of composition. The primer and/or topcoat composition may have one or more corrosion co-inhibitors, such as rare earth oxides, and/or sulfate extenders.

The term "topcoat" refers to a mixture of binder(s), which can include an organic or inorganic based polymer or a blend of polymers, optionally a pigment, optionally a solvent or mixture of solvents, and optionally a curing agent. A topcoat is typically the coating layer in a single or multi-layer coating system whose outer surface is exposed to the atmosphere or environment, and its inner surface is in contact with another coating layer or polymeric substrate. Topcoats useful with embodiments of the present invention include polyurethane based topcoats. However, other topcoats and advanced performance topcoats can be used in the coating system according to embodiments of the present invention as will be understood by those of ordinary skill in the art with reference to this disclosure. Some nonlimiting examples of suitable topcoats include those conforming to MIL-PRF-85285D, such as Product Code numbers Deft 03W127A and Deft 03GY292, available from PRC-DeSoto International, Inc., Sylmar, CA. Some nonlimiting examples of suitable advanced performance topcoats include Product Code numbers Defthane^{®} ELT^{™} 99GY001 and 99W009, available from PRC-DeSoto International, Inc., Sylmar, CA.

In an alternate embodiment, a substrate comprises a composition according to the present invention on the substrate, and an azole containing self-priming topcoat, or an enhanced self-priming topcoat on the composition. The term "self-priming topcoat," also referred to as a "direct to substrate" or "direct to metal" coating, refers to a mixture comprising a binder(s), which can be an organic or inorganic based polymer or blend of polymers, optionally a pigment, optionally a solvent or mixture of solvents, and optionally a curing agent. The term "enhanced self-priming topcoat", also referred to as an "enhanced direct to substrate coating" refers to a mixture comprising functionalized fluorinated binders, such as a fluoroethylene-alkyl vinyl ether in whole or in part with other binder(s), which can include an organic or inorganic based polymer or blend of polymers, optionally a pigment, optionally a solvent or mixture of solvents, and optionally a curing agent. Self-priming topcoats and enhanced self-priming topcoats useful in the coating system according to embodiments of the present invention are known to those of ordinary skill in the art with reference to this disclosure. Nonlimiting examples of self-priming topcoats include those that conform to TT-P-2756A, Product Code numbers Deft 03W169 and 03GY369, available from PRC-DeSoto International, Inc., Sylmar, CA. Nonlimiting examples of enhanced self-priming topcoats include Defthane^{®} ELT^{™} /ESPT, available from PRC-DeSoto International, Inc., Sylmar, CA. Another nonlimiting example of a self-priming topcoat is Product Code number Deft 97GY121, available from PRC-DeSoto International, Inc., Sylmar, CA.

The azole containing self-priming topcoat and enhanced self-priming topcoat may be applied directly to the substrate. The azole containing self-priming topcoat and enhanced self-priming topcoat can optionally be applied to an organic or inorganic polymeric coating, such as a primer and/or topcoat. The self-priming topcoat and enhanced self-priming topcoat may be the coating layer in a single or multi-layer coating system where the outer surface of the coating is exposed to the atmosphere or environment, and the inner surface of the coating may be in contact with the conversion coated substrate or optional polymer coating or primer.

The azole containing primers, topcoats, self-priming topcoats, and enhanced self-priming topcoats can be applied to the substrate, in either a wet or "not fully cured" condition that dries or cures over time, that is, solvent evaporates and/or there is a chemical reaction. The coatings can dry or cure either naturally or by accelerated means for example, an ultraviolet light cured system to form a film or "cured" coating. The coatings can also be applied in a semi or fully cured state, such as an adhesive.

Whereas particular embodiments of the present disclosure have been described above for purposes of illustration, it will be understood by those of ordinary skill in the art that numerous variations of the details of the present disclosure may be made without departing from the invention as defined in the appended claims. For example, although embodiments herein have been described in connection with "an" azole compound, and the like, one or more of these components or any of the other components recited can be used according to the present disclosure.

Although various embodiments of the present disclosure have been described in terms of "comprising" or "including," embodiments "consisting essentially of' or "consisting of' are also within the scope of the present disclosure. For example, while the present disclosure describes a composition including a metal ion and an azole compound, a composition and/or a solution consisting essentially of or consisting of the metal ion and the azole compound is also within the scope of the present disclosure. Similarly, although a corrosion inhibitor comprising or including a metal ion and an azole compound is described, corrosion inhibitors consisting essentially of or consisting of a metal ion and an azole compound are also within the scope of the disclosure. Thus, as described above, the composition may consist essentially of the metal ion and the azole compound. In this context, "consisting essentially of' means that any additional components in the composition will not materially affect the corrosion resistance of a metal substrate coated with the composition. For example, a composition consisting essentially of a rare earth ion and an azole compound is free from Group IA (or Group 1, i.e., the alkali metals) and Group IIA (or Group 2, i.e., the alkali earth metals) metal ions. Also, a composition consisting essentially of an alkali or alkali earth metal ion and an azole compound is free from rare earth element ions.

Any numerical range recited herein is intended to include all sub-ranges subsumed therein. Plural encompasses singular and vice versa. For example, while the present disclosure describes "an" azole compound, a mixture of such azole compounds can be used. When ranges are given, any endpoints of those ranges and/or numbers within those ranges can be combined within the scope of the present disclosure. The terms "including" and like terms mean "including but not limited to." Similarly, as used herein, the terms "on," "applied on," and "formed on" mean on, applied on, or formed on, but not necessarily in contact with the surface. For example, a coating layer "formed on" a substrate does not preclude the presence of one or more other coating layers of the same or different composition located between the formed coating layer and the substrate.

Notwithstanding that the numerical ranges and parameters set forth herein may be approximations, numerical values set forth in the specific examples are reported as precisely as is practical. Any numerical value, however, inherently contains certain errors necessarily resulting from the standard variation found in their respective testing measurements. The word "comprising" and variations thereof as used in this description and in the claims do not limit the disclosure to exclude any variants or additions.

## Claims

1. A conversion coating composition for application to a metal substrate, the conversion coating composition consisting essentially of:
an azole compound present in the composition at a concentration of 0.0005 g/l to 3 g/l of composition;
lithium carbonate and
an aqueous carrier.

2. The composition according to claim 1, wherein the azole compound comprises a cyclic compound having 1 nitrogen atoms, a cyclic compound having 2 or more nitrogen atoms, a cyclic compound having 1 nitrogen atom and 1 oxygen atom, and/or a cyclic compound having 1 nitrogen atom and 1 sulfur atom.

3. The composition according to claim 1, wherein the azole compound comprises a pyrrole, a pyrazole, an imidazole, a triazole, a tetrazole, a pentazole, an oxazole, an isoxazole, a thiazole and/or a isothiazole.

4. The composition according to claim 1, wherein the azole compound comprises 2,5-dimercapto-1,3,4-thiadiazole, IH-benzotriazole, IH-1,2,3-triazole, 2-amino-5-mercapto-1,3,4-thiadiazole, and/or 2-amino-1,3,4-thiadiazole.

5. An article, comprising:
a metal substrate; and
a conversion coating deposited from the composition of claim 1 on at least a portion of the metal substrate.

6. The article of claim 5, wherein the metal substrate comprises aluminum.

7. The article of claim 5, further comprising a coating on the conversion coating.

8. A method of manufacturing an article, the method comprising:
applying the conversion coating composition of claim 1 to at least a portion of a metal substrate.

9. The method of claim 8, further comprising pre-treating the metal substrate prior to application of the composition.

10. The method of claim 8, further comprising applying a coating on at least a portion of the conversion coating.

11. The article of claim 7, wherein the coating on the conversion coating is deposited from a composition comprising:
a binder comprising a functionalized fluorinated binder; and
an azole compound.

12. The method of claim 10, wherein the coating applied to at least a portion of the conversion coating is deposited from a composition comprising:
a binder comprising a functionalized fluorinated binder; and
an azole compound.

## Patentansprüche

1. Umwandlungsbeschichtungszusammensetzung zur Aufbringung auf ein Metallsubstrat, wobei die Umwandlungsbeschichtungszusammensetzung im Wesentlichen aus
einer Azolverbindung, die in der Zusammensetzung in einer Konzentration von 0,0005 g/l bis 3 g/l der Zusammensetzung vorhanden ist, Lithiumcarbonat und
einem wässrigen Träger
besteht.

2. Zusammensetzung gemäß Anspruch 1, wobei die Azolverbindung eine cyclische Verbindung mit 1 Stickstoffatom, eine cyclische Verbindung mit 2 oder mehr Stickstoffatomen, eine cyclische Verbindung mit 1 Stickstoffatom und 1 Sauerstoffatom und/oder eine cyclische Verbindung mit 1 Stickstoffatom und 1 Schwefelatom enthält.

3. Zusammensetzung gemäß Anspruch 1, wobei die Azolverbindung ein Pyrrol, ein Pyrazol, ein Imidazol, ein Triazol, ein Tetrazol, ein Pentazol, ein Oxazol, ein Isoxazol, ein Thiazol und/oder ein Isothiazol enthält.

4. Zusammensetzung gemäß Anspruch 1, wobei die Azolverbindung 2,5-Dimercapto-1,3,4-thiadiazol, IH-Benzotriazol, IH-1,2,3-Triazol, 2-Amino-5-mercapto-1,3,4-thiadiazol und/oder 2-Amino-1,3,4-thiadiazol enthält.

5. Gegenstand enthaltend:
ein Metallsubstrat und
eine Umwandlungsbeschichtung, die aus der Zusammensetzung nach Anspruch 1 auf wenigstens einem Teil des Metallsubstrats abgeschieden ist.

6. Gegenstand nach Anspruch 5, wobei das Metallsubstrat Aluminium enthält.

7. Gegenstand nach Anspruch 5, der zusätzlich eine Beschichtung auf der Umwandlungsbeschichtung aufweist.

8. Verfahren zur Herstellung eines Gegenstands, wobei das Verfahren umfasst:
Aufbringen der Umwandlungsbeschichtungszusammensetzung nach Anspruch 1 auf wenigstens einem Teil eines Metallsubstrats.

9. Verfahren nach Anspruch 8, das zusätzlich die Vorbehandlung des Metallsubstrats vor dem Aufbringen der Zusammensetzung umfasst.

10. Verfahren nach Anspruch 8, das zusätzlich das Aufbringen einer Beschichtung auf wenigstens einem Teil der Umwandlungsbeschichtung umfasst.

11. Gegenstand nach Anspruch 7, wobei die Beschichtung auf der Umwandlungsbeschichtung aus einer Zusammensetzung abgeschieden ist, die ein Bindemittel, das ein funktionalisiertes fluoriertes Bindemittel enthält, und
eine Azolverbindung
enthält

12. Verfahren nach Anspruch 10, wobei die Beschichtung, die auf wenigstens einem Teil der Umwandlungsbeschichtung aufgebracht wird, aus einer Zusammensetzung abgeschieden wird, die
ein Bindemittel, das ein funktionalisiertes fluoriertes Bindemittel enthält, und
eine Azolverbindung
enthält.

## Revendications

1. Composition de revêtement de conversion pour application sur un substrat métallique, laquelle composition de revêtement de conversion est essentiellement constituée :
- d'un composé de type azole, présent dans la composition en une concentration de 0,0005 à 3 grammes par litre de composition,
- de carbonate de lithium,
- et d'un véhicule aqueux.

2. Composition conforme à la revendication 1, dans laquelle le composé de type azole comprend un composé cyclique comportant 1 atome d'azote, un composé cyclique comportant 2 atomes d'azote ou plus, un composé cyclique comportant 1 atome d'azote et 1 atome d'oxygène, et/ou un composé cyclique comportant 1 atome d'azote et 1 atome de soufre.

3. Composition conforme à la revendication 1, dans laquelle le composé de type azole comprend un pyrrole, un pyrazole, un imidazole, un triazole, un tétrazole, un pentazole, un oxazole, un isoxazole, un thiazole et/ou un isothiazole.

4. Composition conforme à la revendication 1, dans laquelle le composé de type azole comprend du 2,5-dimercapto-1,3,4-thiadiazole, du 1H-benzothiazole, du 1H-1,2,3-triazole, du 2-amino-5-mercapto-1,3,4-thiadiazole, et/ou du 2-amino-1,3,4-thiadiazole.

5. Article comprenant
- un substrat métallique,
- et un revêtement de conversion, déposé à partir d'une composition conforme à la revendication 1 sur au moins une partie du substrat métallique.

6. Article conforme à la revendication 5, dans lequel le substrat métallique comprend de l'aluminium.

7. Article conforme à la revendication 5, comprenant en outre un revêtement par-dessus le revêtement de conversion.

8. Procédé de fabrication d'un article, lequel procédé comporte :
- le fait d'appliquer une composition de revêtement de conversion, conforme à la revendication 1, sur au moins une partie d'un substrat métallique.

9. Procédé conforme à la revendication 8, qui comporte en outre le fait de prétraiter le substrat métallique avant l'application de la composition.

10. Procédé conforme à la revendication 8, qui comporte en outre le fait d'appliquer un revêtement par-dessus au moins une partie du revêtement de conversion.

11. Article conforme à la revendication 7, dans lequel le revêtement placé par-dessus le revêtement de conversion a été déposé à partir d'une composition comprenant :
- un liant comprenant un liant fluoré fonctionnalisé,
- et un composé de type azole.

12. Procédé conforme à la revendication 10, dans lequel le revêtement appliqué par-dessus au moins une partie du revêtement de conversion est déposé à partir d'une composition comprenant :
- un liant comprenant un liant fluoré fonctionnalisé,
- et un composé de type azole.
